# EUROPÄISCHE PATENTANMELDUNG

(11) **EP 2 671 633 A1**
(43) Veröffentlichungstag der Anmeldung: **11.12.2013**
(21) Anmeldenummer: 12170987.7
(22) Anmeldetag: 06.06.2012
(51) Int. Cl.: B01J 2/30, B29C 44/34, B65G 53/16, B29C 44/44

(54) **Verfahren zum Transport geschäumter thermoplastischer Polymerpartikel**

(71) Anmelder: BASF SE, 67056 Ludwigshafen (DE)
(72) Erfinder: Die Erfindernennung liegt noch nicht vor
(74) Vertreter: Rippel, Hans Christoph

(57) **Zusammenfassung**

Die Erfindung betrifft ein Verfahren zum Transport geschäumter thermoplastischer Polymerpartikel (3) aus einem Behälter (5, 9) durch mindestens eine Rohrleitung (7, 11), wobei zum Transport der geschäumten thermoplastischen Polymerpartikel (3) ein Gasstrom durch die Rohrleitung (7, 11) angelegt wird. Die geschäumten thermoplastischen Polymerpartikel (3) werden mit einem flüssigen oder pulverförmigen Gleitmittel benetzt.

## Beschreibung

Die Erfindung geht aus von einem Verfahren zum Transport geschäumter thermoplastischer Polymerpartikel aus einem Behälter durch mindestens eine Rohrleitung, wobei zum Transport der geschäumten thermoplastischen Polymerpartikel ein Gasstrom durch die Rohrleitung angelegt wird.

Für geschäumte thermoplastische Polymerpartikel gibt es viele Anwendungsmöglichkeiten. So können diese zum Beispiel eingesetzt werden zur Herstellung von Formteilen, wie Ladungsträger, Sitzpolster, Matratzen oder auch Laufsohlen in Schuhen. Zur Herstellung der jeweiligen Formteile werden die geschäumten Polymerpartikel in ein Werkzeug eingebracht und dort auf Basis der bestehenden Technologie aktuell eingesetzter Formteilautomaten mit Dampf beaufschlagt beziehungsweise erhitzt, so dass diese an ihrer Außenseite miteinander verschmelzen.

Um die geschäumten thermoplastischen Polymerpartikel in das Werkzeug einzubringen, werden diese üblicherweise aus einem Druckfüllbehälter durch eine Rohrleitung in das Werkzeug transportiert. Hierzu ist es einerseits möglich, am Druckfüllbehälter ein Überdruck anzulegen und die geschäumten thermoplastischen Polymerpartikel so durch die Rohrleitung in das Werkzeug zu transportieren. Alternativ ist es möglich, am Werkzeug ein Unterdruck anzulegen und die geschäumten thermoplastischen Polymerpartikel auf diese Weise in das Werkzeug zu saugen. Entsprechend wird auch der Transport in den Druckfüllbehälter durchgeführt.

Nachteil bei herkömmlichen Verfahren ist jedoch, dass Partikel miteinander verkleben können oder an Wandungen anbacken können, wodurch insbesondere Rohrleitungen blockiert werden. Auch mit üblichen Gleitmitteln, die zum Beispiel als Additiv der Polymermasse zugegeben werden, kann keine signifikante Verbesserung erzielt werden. Die Blockwirkung aufgrund des Anhaftens an der Oberfläche, auch durch eine hohe Elastizität der Partikel und einer hieraus entstehenden Kompressibilität verursacht, führt an Wandungen der Leitungen dazu, dass die Druckfüllbehälter derzeit zu lediglich bis zu 50 % gefüllt werden können, da Blockaden in den Materialversorgungsleitungen auftreten. Hieraus resultieren unzureichend gefüllte Werkzeuge zum einen aufgrund der schlechten Rieselfähigkeit und zum anderen der schlechten Fließfähigkeit der geschäumten thermoplastischen Polymerpartikel. Eine Verarbeitung ist somit nur mit erheblichen Einschränkungen möglich. Ein kontinuierlicher Verarbeitungsprozess kann nicht durchgeführt werden und der Anteil an Ausschussformteilen aufgrund nicht vollständig gefüllten Werkzeuges ist vergleichsweise groß.

Aufgabe der vorliegenden Erfindung ist es daher, ein Verfahren zum Transport von geschäumten thermoplastischen Polymerpartikeln bereitzustellen, bei dem ein Blockieren von Rohrleitungen vermieden wird.

Gelöst wird die Aufgabe durch ein Verfahren zum Transport von geschäumten thermoplastischen Polymerpartikeln aus einem Behälter durch mindestens eine Rohrleitung, wobei zum Transport der geschäumten thermoplastischen Polymerpartikel ein Gasstrom durch die Rohrleitung angelegt wird, wobei die geschäumten thermoplastischen Polymerpartikel mit einem flüssigen oder pulverförmigen Gleitmittel benetzt werden.

Durch das Benetzen der Polymerpartikel mit einem flüssigen oder pulverförmigen Gleitmittel wird vermieden, dass die einzelnen geschäumten thermoplastischen Polymerpartikel während des Transportes aneinander haften und so die Rohrleitungen, durch die die geschäumten thermoplastischen Polymerpartikel gefördert werden sollen, blockieren. Dies resultiert weiterhin darin, dass das Werkzeug bei der Herstellung der Formteile jeweils vollständig gefüllt wird und so der Anteil an Ausschussteilen reduziert werden kann.

Damit beim Transport durch die Rohrleitung die Schmierwirkung nicht nachlässt, ist es weiterhin vorteilhaft, wenn bei Verwendung eines flüssigen Gleitmittels so viel Gleitmittel zugegeben wird, dass die geschäumten thermoplastischen Polymerpartikel eine feuchte Oberfläche behalten und das Gleitmittel nicht aufgrund des Gasstromes, der zur Förderung der geschäumten thermoplastischen Polymerpartikel eingesetzt wird, verdunstet.

Der Transport der geschäumten thermoplastischen Polymerpartikel erfolgt zunächst von der Herstellung der Partikel in einen Vorratsbehälter, wobei der Vorratsbehälter auch ein Beutel, Sack oder Fass sein kann, in dem die geschäumten thermoplastischen Polymerpartikel transportiert werden. Aus dem Vorratsbehälter werden die geschäumten thermoplastischen Polymerpartikel üblicherweise durch eine weitere Rohrleitung in einen Druckfüllbehälter gefördert und von diesem durch eine Rohrleitung in das Werkzeug.

Unter Rohrleitung werden im Rahmen der vorliegenden Erfindung sowohl starre als auch flexible Rohrleitungen verstanden. Auch ein Schlauch, beispielsweise ein Polymerschlauch, fällt erfindungsgemäß unter den Begriff Rohrleitung.

Die Herstellung der geschäumten thermoplastischen Polymerpartikel erfolgt nach üblichen Verfahren. So ist es zum Beispiel möglich, ein thermoplastisches Polymergranulat einem Extruder zuzuführen, im Extruder aufzuschmelzen und ein Treibmittel zuzugeben. Die Polymermasse wird dann durch ein Werkzeug gepresst und in einzelne Granulatkörner geschnitten. Die Granulierung erfolgt dabei vorzugsweise in einer Flüssigkeit, die unter Druck gehalten wird, um ein unkontrolliertes Expandieren der Partikel zu verhindern. In einem nächsten Schritt wird der Druck reduziert, um ein gezieltes Expandieren zu ermöglichen. Hierzu ist es erforderlich, dass die Polymermasse noch nicht vollständig erstarrt ist. Nach dem Expandieren erstarrt die Polymermasse und es werden die geschäumten thermoplastischen Polymerpartikel erhalten.

Um eine Blockade durch anhaftende Partikel oder miteinander verklebende Partikel zu vermeiden, ist es notwendig, die Partikel mit dem flüssigen oder festen Gleitmittel zu benetzen, bevor entsprechende Anhaftungen auftreten können. Hierzu ist zum Beispiel möglich, das flüssige oder pulverförmige Gleitmittel im Behälter oder in einer Transportleitung zuzugeben. Wenn das flüssige oder pulverförmige Gleitmittel in einer Transportleitung zugegeben wird, so ist es insbesondere vorteilhaft, wenn die Zugabe am Anfang der Transportleitung erfolgt, damit nicht auf dem Streckenabschnitt zwischen Eintritt in die Transportleitung und Zugabe des flüssigen oder pulverförmigen Gleitmittels eine Blockade auftritt.

Um weiterhin auch zu vermeiden, dass partielle Blockaden auftreten oder nur vereinzelte Partikel aneinander haften, die zu einer Blockade führen können, ist es weiterhin vorteilhaft, wenn das flüssige oder pulverförmige Gleitmittel gleichmäßig verteilt über die geschäumten thermoplastischen Polymerpartikel zugegeben wird. Hierzu ist es zum Beispiel möglich, das flüssige oder pulverförmige Gleitmittel auf die geschäumten thermoplastischen Polymerpartikel zu sprühen. Zum Aufsprühen des flüssigen oder pulverförmigen Gleitmittels eignet sich jede beliebige geeignete Sprühdüse, mit der eine Flüssigkeit oder ein Pulver versprüht werden kann.

Bei einer Zugabe des flüssigen oder pulverförmigen Gleitmittels im Behälter ist es weiterhin vorteilhaft, wenn mehrere Sprühdüsen eingesetzt werden, so dass das flüssige oder pulverförmige Gleitmittel über den gesamten Querschnitt des Behälters zugeführt wird und auf diese Weise alle im Behälter enthaltenen Polymerpartikel benetzt werden.

Um eine vollständige Benetzung aller geschäumten thermoplastischen Polymerpartikel in einem Behälter zu erhalten ist es weiterhin vorteilhaft, die Vorrichtung zum Einsprühen des flüssigen oder pulverförmigen Gleitmittels an einer Position im Behälter vorzusehen, die von allen geschäumten thermoplastischen Polymerpartikeln passiert wird. Insbesondere vorteilhaft ist es, die Vorrichtung zur Zugabe des flüssigen oder pulverförmigen Gleitmittels im oberen Bereich des Behälters vorzusehen und die Partikel ebenfalls von oben einzufüllen, so dass die Partikel beim Einfüllen an der Vorrichtung zur Zugabe des flüssigen oder pulverförmigen Gleitmittels vorbeigeführt werden und auf diese Weise mit dem flüssigen oder pulverförmigen Gleitmittel benetzt werden.

Insbesondere bei flüssigem Gleitmittel und bei größeren Längen der Rohrleitung, durch die die geschäumten thermoplastischen Polymerpartikel gefördert werden, ist es vorteilhaft, das Gleitmittel an mehreren in Strömungsrichtung aufeinanderfolgenden Positionen zuzugeben. Durch die Zugabe des Gleitmittels an mehreren aufeinanderfolgenden Positionen werden die einzelnen geschäumten thermoplastischen Polymerpartikel erneut benetzt, wenn zum Beispiel ein Teil des Gleitmittels aufgrund des zum Transport notwendigen Gasstromes verdunstet ist.

In einer weiteren Ausführungsform ist es insbesondere bei Einsatz eines flüssigen Gleitmittels möglich, einen feuchten Gasstrom zum Transport der geschäumten thermoplastischen Polymerpartikel einzusetzen, wobei der feuchte Gasstrom mit dem flüssigen Gleitmittel gesättigt ist. Aufgrund der Sättigung des Gasstromes mit dem flüssigen Gleitmittel verdunstet kein weiteres Gleitmittel und die Benetzung der Polymerpartikel mit dem flüssigen Gleitmittel bleibt erhalten. Auf diese Weise kann ebenfalls bei einem Transport durch längere Rohrleitungen ein Anbacken durch Verkleben einzelner Polymerpartikel untereinander oder durch Verkleben von Polymerpartikeln mit der Rohrwandung vermieden werden.

In einer ersten Ausführungsform der Erfindung wird ein flüssiges Gleitmittel eingesetzt. Das flüssige Gleitmittel ist vorzugsweise ausgewählt aus Wasser, Silikonölen, Glyzerinestern sowie Mischungen aus mindestens zwei dieser Komponenten. Besonders bevorzugt ist das flüssige Gleitmittel Wasser.

In einer alternativen Ausführungsform wird ein festes Gleitmittel eingesetzt. Dieses wird dabei üblicherweise in Pulverform verwendet. Geeignete pulverförmige Gleitmittel sind zum Beispiel ausgewählt aus Wachsen, Stearaten, beispielsweise Ethylenbisstearoyldiamin oder Talkum oder auch Mischungen aus mindestens zwei dieser Komponenten.

Auch ist es möglich, eine Kombination aus festen und flüssigen Gleitmitteln einzusetzen, wobei in diesem Fall darauf zu achten ist, keine Kombination aus flüssigem und pulverförmigem Gleitmittel zu verwenden, bei dem das pulverförmige Gleitmittel mit dem flüssigen Gleitmittel verklebt und so die Gefahr von Blockaden weiter verstärkt. Besonders bevorzugt ist jedoch die Verwendung von Wasser als Gleitmittel.

Die Menge an Gleitmittel, die zugegeben wird, ist abhängig vom eingesetzten Gleitmittel und kann bezogen auf einen Liter expandierter thermoplastischer Polymerpartikel im Bereich von 1 mg bis zu 4 kg, bevorzugt im Bereich von 1 g bis 2 kg liegen. Wenn als flüssiges Gleitmittel Wasser eingesetzt wird, liegt die Menge an verwendetem Wasser vorzugsweise im Bereich von 10 g bis 4 kg, insbesondere im Bereich von 500 g bis 3 kg ebenfalls jeweils bezogen auf ein Volumen von einem Liter expandierter thermoplastischer Polymerpartikel.

Das für die geschäumten thermoplastischen Polymerpartikel eingesetzte thermoplastische Polymer kann jeder beliebige Thermoplast sein.

Besonders bevorzugt ist das geschäumte thermoplastische Polymer ausgewählt aus expandiertem Polypropylen (E-PP), expandiertem Polyethylen (E-PE), expandiertem Polystyrol (E-PS) und expandiertem thermoplastischen Polyurethan (E-TPU). Ganz besonders bevorzugt ist das geschäumte thermoplastische Polymer ein expandiertes thermoplastisches Polyurethan.

Das geschäumte thermoplastische Polymer kann beliebige Füllstoffe und Additive enthalten, die zur Verarbeitung von thermoplastischen Polymeren eingesetzt werden. Entsprechende Füllstoffe und Additive sind dem Fachmann bekannt.

So kann das geschäumte thermoplastische Polymer zum Beispiel Gleitmittel, Weichmacher, UV-Stabilisatoren, Farbmittel, Pigmente und beliebige weitere Additive, die üblicherweise zu Polymeren zugegeben werden, enthalten. Weiterhin können Füllstoffe oder Verstärkungsstoffe, beispielsweise Fasern, insbesondere Kurzfasern enthalten sein.

In einer Ausführungsform enthält das geschäumte thermoplastische Polymer ein inneres oder äußeres Gleitmittel. Dieses wird üblicherweise als Additiv bei der Herstellung der geschäumten thermoplastischen Polymerpartikel zugegeben. Das innere oder äußere Gleitmittel setzt sich an der Oberfläche der einzelnen geschäumten thermoplastischen Polymerpartikel fest und unterstützt so die Schmierwirkung, wodurch ein Anbacken verhindert werden kann. Alleine ist ein solches inneres oder äußeres Gleitmittel jedoch nicht ausreichend, so dass erfindungsgemäß zusätzlich das flüssige oder pulverförmige Gleitmittel zugegeben wird.

Die Gasströmung, mit der die geschäumten thermoplastischen Polymerpartikel durch die jeweiligen Rohrleitungen transportiert werden, kann zum Beispiel durch Anlegen eines Überdrucks an den Behälter und/oder durch Anlegen eines Unterdrucks auf der Entnahmeseite des Pulvers erzeugt werden. Beim Anlegen eines Überdrucks an den Behälter wird zum Beispiel ein Gebläse an den Behälter angeschlossen und die Gasströmung zunächst durch den Behälter und dann durch die Rohrleitung geleitet, durch die die geschäumten thermoplastischen Polymerpartikel transportiert werden sollen. Entsprechend kann durch eine geeignete Vakuumpumpe auf der Entnahmeseite an der Rohrleitung ein Unterdruck erzeugt werden, mit dem ein Gasstrom durch die Rohrleitung gesaugt wird, so dass die zu transportierenden thermoplastischen Polymerpartikel mit der Gasströmung durch die Rohrleitung gesaugt werden. Auch eine Kombination aus Anlegen eines Überdrucks auf Seiten des Behälters und Anlegen eines Unterdrucks auf der Entnahmeseite ist möglich. Bevorzugt ist es jedoch, entweder am Behälter einen Überdruck oder auf der Entnahmeseite einen Unterdruckseite anzulegen.

Das Gas, mit dem die geschäumten thermoplastischen Polymerpartikel durch die Rohrleitung transportiert werden, ist ein Gas, das gegenüber dem eingesetzten thermoplastischen Polymer inert ist. Besonders bevorzugt ist das Gas, mit dem die geschäumten thermoplastischen Polymerpartikel durch die Rohrleitung transportiert werden Luft. Neben Luft eignet sich jedoch zum Beispiel auch Stickstoff oder Wasserdampf. Besonders bevorzugt ist der Einsatz von Luft zum Transport der geschäumten thermoplastischen Polymerpartikel. Die zum Transport der geschäumten thermoplastischen Polymerpartikel eingesetzte Luft weist vorzugsweise einen Druck im Bereich von 0 bis 5 bar oberhalb des Atmosphärendrucks auf.

Das erfindungsgemäße Verfahren eignet sich, wie vorstehend beschrieben, zum Beispiel für den Transport der geschäumten thermoplastischen Polymerpartikel von einer Vorrichtung zur Herstellung der Polymerpartikel in einen Vorratsbehälter. Der entsprechende Vorratsbehälter kann zum Beispiel ein Silo sein. Alternativ kann der Vorratsbehälter auch ein Behälter zum Transport der geschäumten thermoplastischen Polymerpartikel sein. Ein entsprechender Transportbehälter ist zum Beispiel ein Transportbeutel, ein Transportsack oder auch ein Fass. Wenn die Polymerpartikel in einem Silo zwischengelagert werden, so erfolgt üblicherweise als nächstes ein Transport aus dem Silo in ein Transportfahrzeug, beispielsweise einen entsprechenden Lastwagen mit geeignetem Behälter, mit dem die geschäumten thermoplastischen Polymerpartikel transportiert werden können. Das Befüllen des entsprechenden Lastkraftwagens aus dem Silo oder auch das Befüllen von Säcken oder Fässern aus dem Silo erfolgt ebenfalls durch Rohrleitungen, so dass auch hier das erfindungsgemäße Verfahren eingesetzt werden kann.

Üblicherweise werden die geschäumten thermoplastischen Polymerpartikel in einem nächsten Schritt in einen Druckfüllbehälter eingefüllt. Die Befüllung des Druckfüllbehälters erfolgt ebenfalls im Allgemeinen durch eine Rohrleitung, beispielsweise aus einem Vorratsbehälter oder auch aus einem Transportfahrzeug. Die Zugabe in den Druckfüllbehälter erfolgt vorzugsweise von oben. Im oberen Bereich des Druckfüllbehälters befindet sich dann eine Vorrichtung, mit der die geschäumten thermoplastischen Polymerpartikel mit dem flüssigen und/oder pulverförmigen Gleitmittel besprüht werden können.

Aus dem Druckfüllbehälter werden die geschäumten thermoplastischen Polymerpartikel zur weiteren Verarbeitung in ein Formwerkzeug ebenfalls vorzugsweise über eine Rohrleitung, beispielsweise einen Füllschlauch, gefördert. Im Formwerkzeug wird dann das herzustellende Formteil produziert.

Der Druck im Formwerkzeug zur Herstellung des Formteiles liegt vorzugsweise im Bereich von 0 bis 5 bar. Um die geschäumten thermoplastischen Polymerpartikel vom Druckfüllbehälter in das Formwerkzeug fördern zu können, ist es notwendig, dass der Druck im Druckfüllbehälter höher ist als der Druck im Formwerkzeug. Vorzugsweise ist der Druck im Druckfüllbehälter bis zu 2 bar größer als der Druck im Formwerkzeug. Die Befüllung des Formwerkzeugs erfolgt vorzugsweise durch ein Druckfüllverfahren und Crackspaltverfahren. Diese sind dem Fachmann bekannt. Im Formwerkzeug wird durch Erwärmen das thermoplastische Polymer der geschäumten thermoplastischen Polymerpartikel angeschmolzen, so dass die einzelnen Polymerpartikel miteinander verschweißen. Üblicherweise wird hierzu überhitzter Wasserdampf in das Werkzeug eingeleitet. Auf diese Weise wird ein formstabiles Formteil aus einzelnen geschäumten thermoplastischen Polymerpartikeln hergestellt.

Die einzelnen geschäumten thermoplastischen Polymerpartikel haben im Allgemeinen einen mittleren Durchmesser im Bereich von 1 bis 10 mm, insbesondere im Bereich von 1,5 bis 6 mm. Die Schüttdichte der geschäumten thermoplastischen Polymerpartikel liegt vorzugsweise im Bereich von 10 bis 600 g/l, mehr bevorzugt im Bereich von 20 bis 500 g/l und insbesondere im Bereich von 50 bis 200 g/l.

Die Form der geschäumten thermoplastischen Polymerpartikel kann beliebig sein, zum Beispiel zylinderförmig oder kugelförmig oder ellipsoid. Besonders bevorzugt ist es, wenn die geschäumten thermoplastischen Polymerpartikel eine Kugelform aufweisen.

Ausführungsbeispiele der Erfindung sind in den Figuren dargestellt und werden in der nachfolgenden Beschreibung näher erläutert.

Es zeigen:
- Figur 1: ein Flussdiagramm des erfindungsgemäßen Verfahrens zur Herstellung von Formteilen,
- Figur 2: einen Druckfüllbehälter zur Durchführung des erfindungsgemäßen Verfahrens.

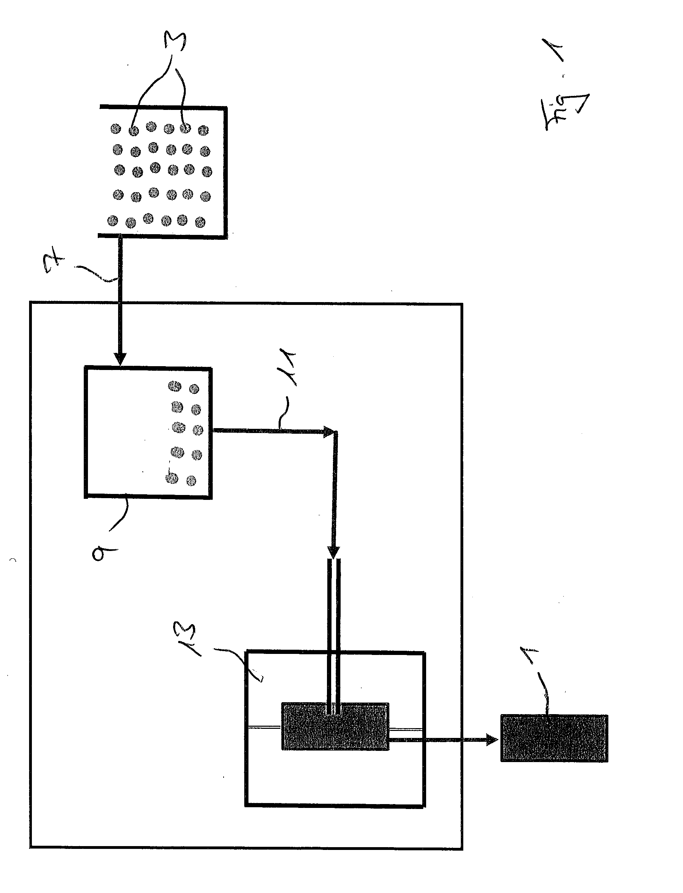

In Figur 1 ist das erfindungsgemäße Verfahren in Form eines Flussdiagramms für die Herstellung von Formteilen dargestellt.

Zur Herstellung von Formteilen 1 aus expandierten thermoplastischen Polymerpartikeln 3 werden zunächst die expandierten thermoplastischen Polymerpartikel 3 aus einem Behälter 5 durch eine Rohrleitung 7 in einen Druckfüllbehälter 9 transportiert.

Der Behälter 5 ist zum Beispiel ein Vorratsbehälter, ein Gebinde, ein Sack, ein Fass oder auch ein Silo oder ein Transportbehälter, der auch fest mit einem Transportfahrzeug verbunden sein kann. In den Behälter 5 werden die expandierten thermoplastischen Polymerpartikel 3 üblicherweise ebenfalls durch eine hier nicht dargestellte Rohrleitung eingeleitet. Je nach Art des Behälters 5 ist es auch möglich, dass die expandierten thermoplastischen Polymerpartikel 3 in einen weiteren hier ebenfalls nicht dargestellten Behälter umgefüllt werden. So können die expandierten thermoplastischen Polymerpartikel 3 zum Beispiel aus einem Transportfahrzeug in ein Silo umgeladen werden oder auch aus einem Silo zunächst in Gebinde, Fässer oder Säcke zum weiteren Transport.

Aus dem Behälter 5 gelangen die expandierten thermoplastischen Polymerpartikel 3 in den Druckfüllbehälter 9. Im Druckfüllbehälter 9 werden die thermoplastischen Polymerpartikel unter einem im Wesentlichen konstanten Druck gehalten. Der Einsatz des Druckfüllbehälters 9 erlaubt einen kontinuierlichen Herstellprozess der Formteile 1, da durch den Druckfüllbehälter 9 immer ausreichend expandierte thermoplastische Polymerpartikel 3 bereit gehalten werden, die zum Formteil 1 umgeformt werden können. Zur Herstellung des Formteils 1 werden expandierte thermoplastische Polymerpartikel 3 aus dem Druckfüllbehälter 9 durch eine weitere Rohrleitung 11 in ein Formwerkzeug 13 transportiert. Der Transport erfolgt dabei in einem Gasstrom aufgrund eines Druckunterschiedes zwischen Druckfüllbehälter 9 und Formwerkzeug 13. Hierzu ist es einerseits möglich, am Druckfüllbehälter 9 einen Überdruck anzulegen oder alternativ am Formwerkzeug 13 einen Unterdruck. Bei einem Überdruck im Druckfüllbehälter 9 werden die expandierten thermoplastischen Polymerpartikel 3 in das Formwerkzeug 13 gedrückt, bei einem Unterdruck im Formwerkzeug 13 in das Formwerkzeug 13 gesaugt. Auch eine Kombination aus Überdruck im Druckfüllbehälter 9 und Unterdruck im Formwerkzeug 9 ist möglich. Aufgrund des Druckunterschiedes wird eine Gasströmung erzeugt, in der die expandierten thermoplastischen Polymerpartikel mitgerissen werden. Auf die gleiche Weise erfolgt auch der Transport in den Behälter 5 und aus dem Behälter 5 in den Druckfüllbehälter 9. Das Befüllen des Druckfüllbehälters 9 und des Behälters 5 erfolgt dabei jedoch im Allgemeinen nicht kontinuierlich. So ist es zum Beispiel üblich, jeweils bei Unterschreiten einer Mindestfüllmenge oder bei Anlieferung von Material den Behälter 5 beziehungsweise den Druckfüllbehälter 9 zu befüllen.

Erfindungsgemäß werden die expandierten thermoplastischen Polymerpartikel mit einem flüssigen oder pulverförmigen Gleitmittel benetzt, um Anbackungen in Behältern 5, 9 und Rohrleitungen 7, 11 zu verhindern. Das flüssige oder pulverförmige Gleitmittel kann dazu im Behälter 5, im Druckfüllbehälter 9 oder in einer Rohrleitung 7, 11 zugegeben werden. Auch eine Zugabe an mehreren Positionen ist möglich. Um eine gleichmäßige Benetzung der expandierten thermoplastischen Polymerpartikel zu erhalten ist es vorteilhaft, die expandierten thermoplastischen Polymerpartikel 3 mit dem flüssigen oder pulverförmigen Gleitmittel zu besprühen. Zum Besprühen kann dabei jede beliebige, dem Fachmann bekannte und für das jeweilige Gleitmittel geeignete Sprühdüse eingesetzt werden. Insbesondere geeignet sind Lechlerdüsen. Weitere geeignete Düsen sind zum Beispiel Flachstrahldüsen, Hohldüsen und Vollkegeldüsen so wie einfache Bohrungen und Schlitze. So ist es zum Beispiel möglich, als Düsen Bohrungen in einer Ringleitung im Behälter 5, 9 oder in der Rohrleitung 7, 11 vorzusehen, wobei die Ringleitung für eine möglichst vollständige Benetzung vorzugsweise quer zur Strömungsrichtung ausgerichtet ist.

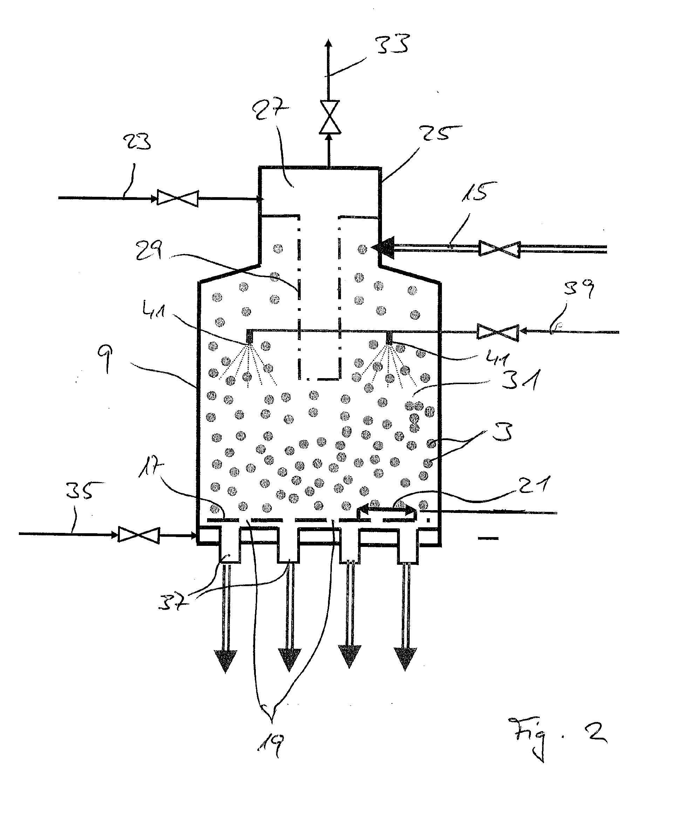

In Figur 2 ist beispielhaft ein Druckfüllbehälter mit Vorrichtung zur Benetzung der expandierten thermoplastischen Polymerpartikel dargestellt.

Über eine Befüllungsleitung 15 werden expandierte thermoplastische Polymerpartikel 3 in den Druckfüllbehälter 9 eingeleitet. Die Befüllungsleitung 15 befindet sich dabei vorzugsweise im oberen Bereich des Druckfüllbehälters 9. Die expandierten thermoplastischen Polymerpartikel 3 fallen auf einen Boden 17 im Druckfüllbehälter. Der Boden 17 weist Öffnungen 19 auf, durch die die expandierten thermoplastischen Polymerpartikel entnommen werden können. Mit einem Materialschieber 21 können die expandierten thermoplastischen Polymerpartikel 3 zu den jeweiligen Öffnungen 19 auf dem Boden geschoben werden, um ein vollständiges Entleeren des Druckfüllbehälters 9 zu ermöglichen.

Um den notwendigen Druck im Druckfüllbehälter 9 zu halten, kann über eine Fülldruckleitung 23 ein Gas, vorzugsweise Luft oder Stickstoff, in den Druckfüllbehälter 9 eingeleitet werden. Die Fülldruckleitung 23 befindet sich dabei vorzugsweise am Kopf 25 des Druckfüllbehälters 9 und mündet in einen Gasraum 27, der mit einer Filtereinheit 29 vom Materialbereich 31 des Druckfüllbehälters 9 getrennt ist. Zusätzlich mündet in den Gasraum 27 eine Entlüftungsleitung 33, durch die der Druckfüllbehälter zum Beispiel für eine Revision entlüftet und auf Umgebungsdruck gebracht werden kann.

Zur Entnahme der expandierten thermoplastischen Polymerpartikel wird ein Transportgas durch eine Transportgasleitung 35 in den Druckfüllbehälter 9 eingeleitet. Die Transportgasleitung 35 mündet dabei vorzugsweise unterhalb des Bodens 17. Das Transportgas wird dann zusammen mit expandierten thermoplastischen Polymerpartikeln durch eine Entnahmeöffnung 37 in die Rohrleitung 11, die hier nicht dargestellt ist, eingeleitet und zum Formwerkzeug 13 geführt. Erfindungsgemäß werden die expandierten thermoplastischen Polymerpartikeln mit einem flüssigen oder pulverförmigen Gleitmittel benetzt. Hierzu wird das flüssige oder pulverförmige Gleitmittel, vorzugsweise flüssiges Gleitmittel, beispielsweise Wasser, durch eine Gleitmittelleitung 39 zu Sprühdüsen 41 im Materialbereich 31 des Druckfüllbehälters 9 geleitet. Durch die Sprühdüsen wird das flüssige oder pulverförmige Gleitmittel auf die expandierten thermoplastischen Polymerpartikel verteilt, so dass die expandierten thermoplastischen Polymerpartikel im Wesentlichen vollständig mit dem flüssigen oder pulverförmigen Gleitmittel benetzt werden.

Neben der Anordnung der Sprühdüsen 41 im Druckfüllbehälter können alternativ oder zusätzlich auch Sprühdüsen im Behälter 5, in weiteren Behältern oder auch in Rohrleitungen vorgesehen sein.

### Beispiele

### Vergleichsbeispiel

Bei der Herstellung eines Formteiles aus Partikeln aus E-TPU 32 mg auf einem Formteilautomaten wurde ein Druckfüllbehälter (9) mit einem Füllvolumen von 60 I wie üblich gefüllt. In der Startphase kam es im Druckfüllbehälter (9) und während des Zyklus beim Füllvorgang eines Formwerkzeuges (13) für eine Platte mit den Maßen 300 mm x 200 mm x 25 mm in den Füllschläuchen (11) vom Druckfüllbehälter (9) zum Formwerkzeug (13) zu Blockaden der E-TPU Partikel, sowohl der Partikel untereinander als auch an den Wänden der Füllschläuche (11). Aufgrund dieser Blockaden wurde über die im Formwerkzeug (13) befindlichen Füller kein Material in das Formwerkzeug (13) eingebracht, obwohl ein ständiger Luftstrom zum Transport der Partikel zur Verfügung stand. Es konnte nur eine Teilfüllung des Formwerkzeuges (13) erzielt werden. Auch traten während des üblicherweise zwischen 2 und 10 s andauernden Rückblasens der nicht für die Füllung des Formteils benötigten Partikel aus den Füllschläuchen (11) in den Druckfüllbehälter (9) Blockaden im Übergangsbereich der Füllschläuche (11) in den Druckfüllbehälter (9) auf. Eine kontinuierliche Formteilherstellung konnte aus diesem Grund nicht gewährleistet werden. Bei der Herstellung der Platten mit dieser diskontinuierlichen Fahrweise lag bei Füllung des Druckfüllbehälters von weniger als 50% eine Ausschussquote aufgrund der häufig auftretenden Teilfüllung des Werkzeuges von deutlich mehr als 60 % vor. Ein weiter gefüllter Druckfüllbehälter (9) führte zu einer noch höheren Ausschussquote.

### Beispiel

Unter den gleichen Bedingungen wie im Vergleichsbeispiel wurde auf einem Formteilautomat ein Formteil aus E-TPU 32mg hergestellt. Hierzu wurde der Druckfüllbehälter (9) wie üblich gefüllt. Im Unterschied zum Vergleichsbeispiel wurden jedoch während der Füllphase des Druckfüllbehälters (9) die Partikel im Druckfüllbehälter (9) mit Wasser mit einer Menge von 2,5 kg/l Partikel beaufschlagt. Wird der Formfüllvorgang eingeleitet, werden unmittelbar vor dem Formfüllvorgang bei jedem Zyklus ca. 0,6 I Wasser in den Druckfüllbehälter (9) gesprüht, um hier eine kontinuierliche Befeuchtung der Partikel während des gesamten Prozesses zu gewährleisten. Mit dieser Vorgehensweise konnten bereits ab dem zweiten Zyklus gute, gefüllte Formteile im kontinuierlichen Betrieb gefertigt werden. Es wurden keine Blockaden der Partikel im Druckfüllbehälter (9) und in den Füllschläuchen (11) während des Formfüllvorganges und während des Rückblasens der überschüssigen Partikel in den Druckfüllbehälter (9) festgestellt. Eine Unterbrechung während der gesamten Herstellung der Formteile trat nicht mehr auf. Die Ausschussrate lag bei weniger als 5%.

### Bezugszeichenliste

- 1: Formteil
- 3: expandierte thermoplastische Polymerpartikel
- 5: Behälter
- 7: Rohrleitung
- 9: Druckfüllbehälter
- 11: Rohrleitung
- 13: Formwerkzeug
- 15: Befüllungsleitung
- 17: Boden
- 19: Öffnung
- 21: Materialschieber
- 23: Fülldruckleitung
- 25: Kopf
- 27: Gasraum
- 29: Filtereinheit
- 31: Materialbereich
- 33: Entlüftungsleitung
- 35: Transportgasleitung
- 37: Entnahmeöffnung
- 39: Gleitmittelleitung
- 41: Sprühdüse

## Patentansprüche

1. Verfahren zum Transport geschäumter thermoplastischer Polymerpartikel (3) aus einem Behälter (5, 9) durch mindestens eine Rohrleitung (7, 11), wobei zum Transport der geschäumten thermoplastischen Polymerpartikel (3) ein Gasstrom durch die Rohrleitung (7, 11) angelegt wird, **dadurch gekennzeichnet, dass** die geschäumten thermoplastischen Polymerpartikel (3) mit einem flüssigen oder pulverförmigen Gleitmittel benetzt werden.

2. Verfahren gemäß Anspruch 1, **dadurch gekennzeichnet, dass** das flüssige oder pulverförmige Gleitmittel im Behälter oder in der Rohrleitung (7, 11) zugegeben wird.

3. Verfahren gemäß Anspruch 1 oder 2, **dadurch gekennzeichnet, dass** das flüssige oder pulverförmige Gleitmittel auf die geschäumten thermoplastischen Polymerpartikel (3) gesprüht wird.

4. Verfahren gemäß einem der Ansprüche 1 bis 3, **dadurch gekennzeichnet, dass** an mehreren in Strömungsrichtung aufeinanderfolgenden Positionen flüssiges oder pulverförmiges Gleitmittel zugegeben wird.

5. Verfahren gemäß einem der Ansprüche 1 bis 4, **dadurch gekennzeichnet, dass** das Gleitmittel flüssig ist und ausgewählt ist aus Wasser, Silikonölen, Glyzerinestern und Mischungen aus mindestens zwei dieser Komponenten.

6. Verfahren gemäß einem der Ansprüche 1 bis 4, **dadurch gekennzeichnet, dass** das Gleitmittel pulverförmig ist und ausgewählt ist aus Wachsen, Stearaten, Talkum und Mischungen aus mindestens zwei dieser Komponenten.

7. Verfahren gemäß einem der Ansprüche 1 bis 6, **dadurch gekennzeichnet, dass** eine Mischung aus mindestens einem flüssigen und mindestens einem pulverförmigen Gleitmittel zugegeben wird.

8. Verfahren gemäß einem der Ansprüche 1 bis 7, **dadurch gekennzeichnet, dass** die Menge an Gleitmittel, die zugegeben wird, im Bereich von 10 mg bis 4 kg jeweils bezogen auf einen Liter expandierter thermoplastischer Polymerpartikel liegt.

9. Verfahren gemäß einem der Ansprüche 1 bis 8, **dadurch gekennzeichnet, dass** das geschäumte thermoplastische Polymer ausgewählt ist aus expandiertem Polypropylen, expandiertem Polyethylen, expandiertem Polystyrol und expandiertem thermoplastischen Polyurethan.

10. Verfahren gemäß einem der Ansprüche 1 bis 9, **dadurch gekennzeichnet, dass** das geschäumte thermoplastische Polymer ein inneres oder äußeres Gleitmittel enthält.

11. Verfahren gemäß einem der Ansprüche 1 bis 10, **dadurch gekennzeichnet, dass** die Gasströmung durch Anlegen eines Überdrucks am Behälter (5, 9) und/oder eines Unterdrucks auf der Entnahmeseite der Rohrleitung (7, 11) erzeugt wird.

12. Verfahren gemäß einem der Ansprüche 1 bis 11, **dadurch gekennzeichnet, dass** die geschäumten thermoplastischen Polymerpartikel (3) aus einem Behälter (5) in einen Fülldruckbehälter (9) transportiert werden.

13. Verfahren gemäß einem der Ansprüche 1 bis 12, **dadurch gekennzeichnet, dass** die geschäumten thermoplastischen Polymerpartikel durch eine Rohrleitung (11) in ein Formwerkzeug (13) transportiert werden.
